# EUROPEAN PATENT SPECIFICATION

(11) **EP 3 738 791 B1**
(45) Date of publication and mention of the grant of the patent: **07.04.2021**
(21) Application number: 19397515.8
(22) Date of filing: 14.05.2019
(51) Int. Cl.: B62D 55/02, B60C 11/03, B60C 11/13

(54) **PNEUMATIC VEHICLE TYRE FOR FORESTRY USE**
FAHRZEUGLUFTREIFEN FÜR DIE FORSTWIRTSCHAFT
PNEU DE VÉHICULE PNEUMATIQUE POUR UTILISATION FORESTIÈRE

(43) Date of publication of application: 18.11.2020
(73) Proprietor: Nokian Raskaat Renkaat Oy, 37101 Nokia (FI)
(72) Inventor: Haapalainen, Mika, 37101 Nokia (FI); Junttila, Joonas, 37140 Nokia (FI); Mäkelä, Teppo, 37150 Nokia (FI); Räsänen, Samuli, 37100 Nokia (FI); Toivanen, Heidi, 33540 Tampere (FI); Claassen, Caleb, 33210 Tampere (FI)
(74) Representative: Berggren Oy, Tampere

(56) References cited:
- EP-A1- 3 150 405
- JP-A- 2006 273 052
- JP-A- 2012 051 478
- US-A1- 2009 084 478
- US-B1- 6 533 007

## Description

### Field of the solution

The solution to be presented relates to a pneumatic tyre for forestry use. The solution to be presented relates further to forestry machine having the pneumatic tyre. The solution to be presented relates further to a method of installing the pneumatic tyre onto a forestry machine.

### Background of the solution

Pneumatic tyres applied in forestry, especially in forestry machines, are used in severe off-road conditions in which the tyre is subject to damages caused by rough terrain, stones, tree stumps and logging waste removed from felled trees. Additionally, a continuous track installed on the tyre wears down the tyre and the tyre is subject to damages caused by the track that is dislocated and forced to move on the tyre in such a way that projecting parts of the track may damage the tyre or the track is not optimally placed on the tyre.

Not only the track is used to improve the traction capability of tyre but alternatively also a tyre chain may be in use. The tyre chain wears down the tyre and may be dislocated when the tyre is used in rough terrain.

A pneumatic tyre suitable for forestry use and applied in forestry machines is shown in EP 3412475 A1. A track suitable for use with pneumatic tyres is shown in WO 2019/016430 A1. Further pneumatic tyres are disclosed in US 2009/0084478 A1, JP 2006273052 A, JP 2012051478 A, and EP 3150405 A1. A pneumatic tyre according to the preamble of claim 1 is disclosed in US 6533007 B1.

### Brief summary of the solution

The pneumatic tyre for forestry uses according to the solution is presented in claim 1. The forestry machine according to the solution is presented in claim 13. The method of installing tyres onto a forestry machine according to the solution is presented in claim 14.

According to the presented solution the pneumatic tyre for forestry use comprises a ground-engaging tread section extending around the tyre in the circumferential direction of the tyre, the tread section defining an imaginary equatorial plane that is perpendicular to an axial direction of the tyre and passes through a centre region of the tread section; a pair of bead sections, located on two opposite sides of the tyre; a pair of sidewall sections, located on two opposite sides of the tyre, wherein each sidewall section extends between the respective bead section and the tread section, and wherein the tread section defines a pair of shoulder regions adjacent to the respective sidewall section.

The tread section comprises a tread block row on both sides of the equatorial plane and each tread block row extends in the circumferential direction. Each tread block row comprises a series of primary tread blocks that are spaced along the circumferential direction and define tread grooves located between the primary tread blocks and defining a tread groove bottom from which the primary tread blocks extend radially to a height at which each primary tread block comprises a radially outermost surface; wherein each primary tread block is oriented obliquely with respect to the circumferential direction and extends obliquely with respect to the axial direction from the centre region to the shoulder region.

According to the presented solution the tread section further comprises a series of secondary tread blocks, each secondary tread block being located in the tread groove between two consecutive primary tread blocks and extending radially from the tread groove bottom, each secondary tread block extending in the tread groove obliquely with respect to the axial direction to the shoulder region.

Each secondary tread block comprises a radially outermost surface and an axially outermost shoulder surface in such a way that the secondary tread block extends radially from the tread groove bottom to a height that is reduced with respect to the height of the radially outermost surfaces of the primary tread blocks; that the shoulder surface in the shoulder region forms a continuation of the radially outermost surface and is oriented obliquely in relation to the radially outermost surface and in relation to both the axial direction and a radial direction; and that the radially outermost surface provides a protecting surface suitable for safeguarging the tread groove bottom from a track which can be placed on the tread section and the shoulder surface provides on a side of the tread section a supporting surface suitable for supporting the track.

According to an aspect of the solution each primary tread block comprises the radially outermost surface and an axially outermost shoulder surface, the shoulder surface in the shoulder region forming a continuation of the radially outermost surface and being oriented obliquely in relation to the radially outermost surface and in relation to both the axial direction and the radial direction. The radially outermost surface provides a supporting surface suitable for supporting the track and the shoulder surface provides on a side of the tread section a supporting surface suitable for supporting the track.

According to a further aspect of the solution the secondary tread blocks extend past the primary tread blocks and farther onto the sidewall section than the primary tread blocks in such a way that an end of each secondary tread block extends axially from the sidewall section. The end of the secondary tread block forms a step suitable for supporting a tyre chain which can be placed on the tread section and suitable for keeping the tyre chain in place.

According to a third aspect of the presented solution the tyre is applied in a forestry machine. The forestry machine comprises a frame, the frame having two opposite sides and being wheeled for propulsion of the forestry machine and having two or more wheel assemblies with tyres on each of the two opposite sides of the frame, at least one of the wheel assemblies comprising a tyre according to the presented solution. The forestry machine further comprises a continuous track circling one of the wheel assemblies including the tyre and/or a pair of wheel assemblies including the tyre and being placed on the tread section of the tyre, the track being in contact with the primary and secondary tread blocks.

According to a fourth aspect of the presented solution the tyre is applied in a method of installing tyres onto a forestry machine. The forestry machine includes a frame, the frame having two opposite sides and being wheeled for propulsion of the forestry machine and having two or more wheel assemblies with tyres on each of the two opposite sides of the frame. The method comprising mounting at least one of the wheel assemblies comprising a tyre according to the presented solution to the frame of the forestry machine.

The method may further include installing a continuous track to circle one of the wheel assemblies including the tyre and/or a pair of wheel assemblies including the tyre and being placed on the tread section of the tyre, the track being in contact with the primary and secondary tread blocks.

The presented solution provides the advantage that the radially outermost surface of the secondary tread block protects the groove bottom against damage caused by off-road conditions when moving along rough terrain. Additionally, the radially outermost surface protects the groove bottom from projecting parts of a continuous track digging into the material of the groove bottom when the track is forced to move laterally on the tread section as a consequence of the off-road conditions.

The presented solution provides the advantage that the shoulder surfaces of the main and secondary tread blocks prevent the track from moving laterally on the tread section. The shoulder surfaces keep the track in place in such a way that in a lateral, axial direction they support the track and prevent the projecting parts of the track from moving onto the tread section.

A further advantage provided by the secondary tread blocks is increased traction capability as a consequence of axially and/or radially extending edges of the secondary tread blocks.

The presented solution provides the advantage that the step adapted to support a tyre chain prevents the tyre chain from slipping and moving from the sidewall section onto the tread section.

The forestry machine is e.g. a felling machine for felling trees, a harvester for felling trees and processing tree trunks, or a forwarder for collecting and transporting logs and timber.

### Description of the drawings

The presented solution will be described in greater detail in the following, with reference to the accompanying drawings.
Figure 1 shows a tyre according to the presented solution.
Figure 2 shows part of the tread section of the tyre shown in Fig. 1.
Figure 3 shows the arrangement of the tread blocks of the tyre shown in Fig. 1, as seen from above the tread section.
Figure 4 shows part of the tread section of the tyre shown in Fig. 1 as seen from a side of the tyre.
Figure 5 shows in a cross-section of the tyre of Fig. 1 the location of primary and secondary tread blocks in relation to a track placed on the tread section of the tyre.
Figure 6 shows part of the cross-section shown in Fig. 5.
Figure 7 shows a forestry machine on which the tyre according to the solution may be applied.

### Detailed description of the solution

The presented solution relates to a pneumatic tyre 100 which is suitable for use in forestry, especially in forestry machines.

The forestry machine is a timber-harvesting vehicle adapted to operate in rough terrain and handle timber. The forestry machine is adapted to fell trees in a felling site or to transport timber in the felling site, for example a felling machine for felling trees, a harvester for felling a tree and processing the trunk of the felled tree, including debranching and cross-cutting, or a forwarder for collecting and transporting timber, e.g. to a collection point.

This description deals with a pneumatic tyre that is adapted to be in contact with the ground surface. The tyre is filled with a gas, such as air, e.g. by means of an inner tube or without it. The ground-engaging tread section of the tyre is provided on the circumference of the tyre and constitutes an endless surface in the circumferential direction of the tyre, making it possible for the tyre to roll forward.

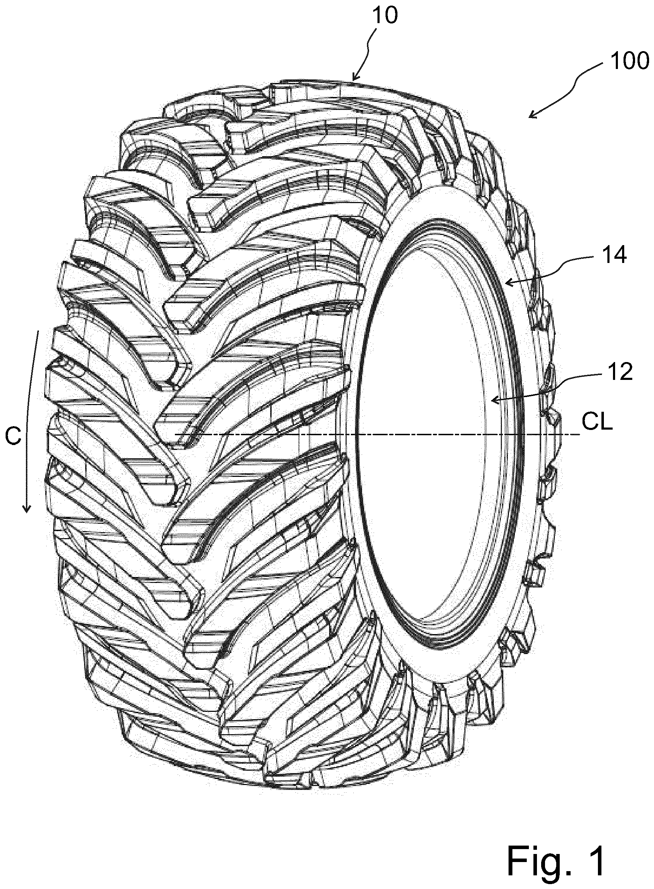

In the presented solution, with reference to Figs. 1 to 6, the tyre 100 comprises a ground-engaging tread section 10, a pair of bead sections 12, and a pair of sidewall sections 14.

The tread section 10 extends around the tyre 100 in a circumferential direction C of the tyre 100, the tread section 10 defining an imaginary equatorial plane EP that is perpendicular to axial directions A and passes through a centre region 40 of the tread section 10.

The axial direction A refers to directions that extend from the equatorial plane EP and are parallel to the axis of rotation CL of the tyre, i.e. the centreline CL defined by the circular shape of the tyre 100. The equatorial plane EP refers to a plane perpendicular to the axis of rotation CL and passing through the centre region 40, preferably the centre of the tread section 10.

The bead sections 12 are located on two opposite sides of the tyre 100. Preferably, the bead sections 12 are adapted to secure the tyre 100 to a wheel rim.

The sidewall sections 14 are located on two opposite sides of the tyre 100. Each sidewall section 14 extends between the respective bead section 12 and the tread section 10. The tread section 10 may define a pair of shoulder regions 16, each shoulder region 16 being adjacent to the respective sidewall section 12.

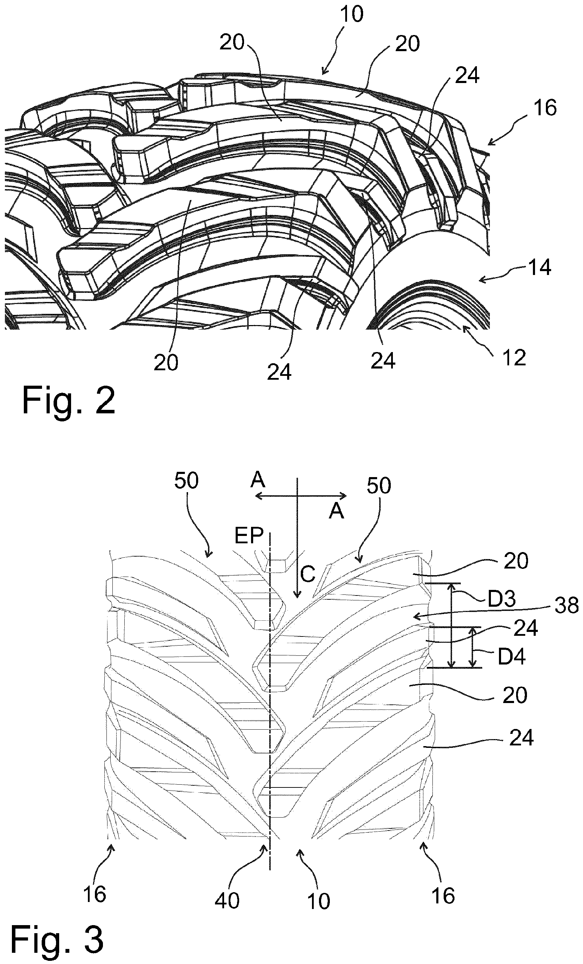

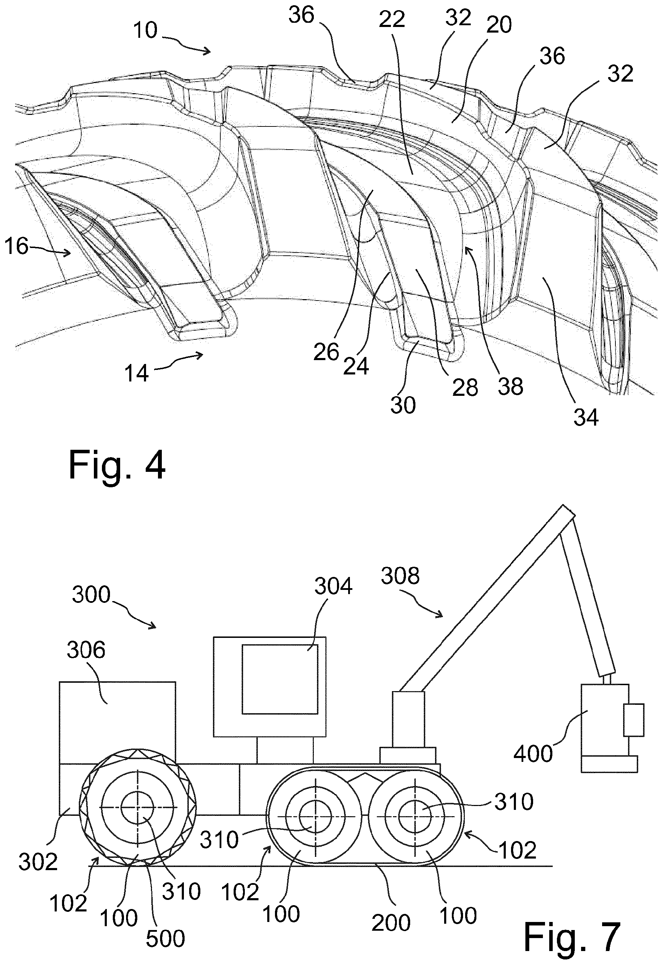

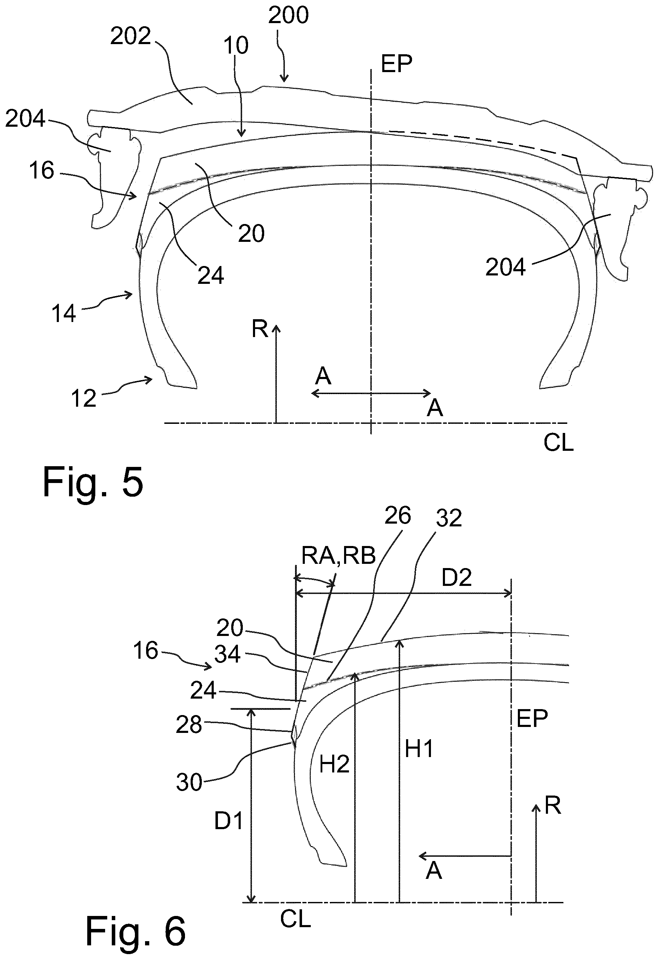

The tread section 10 comprises a tread block row 50 on both sides of the equatorial plane EP, each tread block row 50 including tread blocks and extending in the circumferential direction C, see Fig. 3. Each tread block row 50 comprises a series of primary tread blocks 20 that are spaced along the circumferential direction C and define tread grooves 38 located between the primary tread blocks 20 and defining a tread groove bottom 22 (see Fig. 4). The primary tread blocks 20 extend radially from the tread groove bottom 22. The primary tread blocks 20 extend radially to a height H1 (see Fig. 6) at which each primary tread block 20 comprises a radially outermost surface 32.

Each primary tread block 20 is oriented obliquely with respect to the circumferential direction CL. The primary tread block 20 extends obliquely with respect to the axial direction A from the centre region 40 to the shoulder region 16.

According to an example, the height H1 relates to the height of the tread section 10 excluding the shoulder region 16, i.e. the radially outermost surface 32.

Preferably, the primary tread blocks 20 extend to the centre region 40 and cross the equatorial plane EP. Preferably, all the tread grooves 38 of the tyre section are connected to each other.

According to an example, see Figs 1 and 3, the primary tread blocks 20 alternate in the centre region 40 in such a way that every other primary tread block 20 belongs to one of the tread block rows 50 and every other primary tread block 20 belongs to the other one of the tread block rows 50.

Preferably, in the tread section 10, the percentage of the area covered by the tread grooves 38 is at the most 25%, 30%, or 35%, or preferably at the most 40%, of the area covered by both the tread grooves 38 and the primary tread blocks 20. Preferably, the primary tread block 20 is oriented obliquely at an angle of 30° to 60°, or 35° to 55°, or 40° to 50°, with respect to the circumferential direction C.

Preferably, the centre region 40 covers in the axial direction A not more than 5%, 10%, or 15%, or preferably not more than 20% of the width of the tread section 10.

In the presented solution, the tread section 10 further comprises a series of secondary tread blocks 24. Each secondary tread block 24 is in the tread groove 38 (see Fig. 4) between two consecutive primary tread blocks 20. The secondary tread blocks 24 extend radially from the tread groove bottom 22. The secondary tread block 24 extends in the tread groove 38 obliquely with respect to the axial direction A to the shoulder region 16.

Thus, each tread block row 50 includes one series of secondary tread blocks 24 as described above. In each tread block row 50, the secondary tread blocks 24 are spaced along the circumferential direction C and alternate with the primary tread blocks 20.

Preferably, the tread groove bottom 22 extends in the axial direction A to the sidewall section 14 on opposite sides of the secondary tread block 24 as shown in Figs. 1 and 4, or on one side only. Thus, on each side of the secondary tread block 24, the secondary tread block 24 is separated from the primary block 20 by the tread groove bottom 22 or by a groove.

Preferably, the secondary tread block 24 is oriented obliquely at an angle of 30° to 60°, or 35° to 55°, or 40° to 50°, with respect to the circumferential direction C, and/or the orientation of the secondary tread block 24 substantially corresponds to the orientation of the primary tread block 20.

Each secondary tread block 24 comprises a radially outermost surface 26 and an axially outermost shoulder surface 28 (also herein referred to as the shoulder surface 28). In each shoulder region 16 the shoulder surface 28 forms a continuation of the radially outermost surface 26. The shoulder surface 28 is oriented obliquely in relation to the radially outermost surface 26 and in relation to both the axial direction A and the radial direction R.

Preferably, the shoulder surface 28 and the radially outermost surface 26 form a top surface of the secondary tread block 24, the top surface being angled, see Figs. 2 and 4.

According to an example, the shoulder surface 28 forms in the shoulder region 16 a bevelled edge of the secondary tread block 24.

According to an example, as shown in Fig. 4, each primary tread block 20 in addition to the radially outermost surface 32 comprises an axially outermost shoulder surface 34 (also herein referred to as the shoulder surface 34). In each shoulder region 16 the shoulder surface 34 forms a continuation of the radially outermost surface 32. The shoulder surface 34 is oriented obliquely in relation to the radially outermost surface 32 and in relation to both the axial direction A and the radial direction R.

Preferably, the shoulder surface 34 and the radially outermost surface 32 form a top surface of the primary tread block 20, the top surface being angled.

According to an example, as shown in Fig. 1, the shoulder surface 34 forms in the shoulder region 16 a bevelled edge of the primary tread block 20.

The secondary tread blocks 24 extends radially from the tread groove bottom 22 to a height H2 (see Fig. 6) that is reduced with respect to the height H1 of the radially outermost surfaces 32 of the primary tread blocks 20.

According to an example, in the tread section 10 excluding the shoulder region 16, i.e. along the radially outermost surface 26, the height H2 is at the most 20%, 30%, or 40%, or preferably at the most 50%, of the height H1.

According to an example, see Figs. 1 and 6, the radially outermost surface 26 of each secondary tread block 24 approaches gradually the level defined by the tread groove bottom 22 while the secondary tread block 24 extends towards the centre region 40. Preferably, the secondary tread block 24 is less than 80%, or 70%, or preferably less than 60%, of the length of the primary tread block 20, measured along the primary tread block 20 in the tread section 10.

According to an example, see Figs. 4 and 6, the secondary tread block 24 may extend past the primary tread block 20 onto the sidewall section 14, farther than the primary tread block 20. An end of the secondary tread block 24 extends axially from the sidewall section 14.

In Fig. 5 a track 200 to be placed on the tread section 10 is shown in a cross-section.

The track 200 may include a series of bodies 202 that extend in the axial directions A across the tread section 10 when placed on the tread section 10. Each body 202 may have two opposite, outer ends to each of which a guide plate 204 may be attached. The guide plates 204 preferably extend from the outer ends towards the centreline CL. The bodies 202 are articulatedly attached to each other to form the track 200 that is continuous and adapted to extend in the circumferential direction C.

The track 200, e.g. the guide plate 204, is further adapted to be placed adjacent to the shoulder region 16 and preferably the track 200, e.g. the guide plate 204, and the shoulder surface 28 (see Fig. 6) of the secondary tread block 24 are adjacent in the axial direction A.

Additionally, according to an example, the track 200, e.g. the guide plate 204, and the shoulder surface 34 (see Fig. 6) of the primary tread block 20 are adjacent in the axial direction A.

The above-mentioned forestry machine 300, see Fig. 7, may comprise a frame 302 having two opposite sides and being wheeled for propulsion of the forestry machine. On each side of the frame 302, there may be two or more wheel assemblies 102 each including a tyre. According to an example, a pair of wheel assemblies 102 may be installed to a bogie axle assembly of the frame 302. At least one of the wheel assemblies 102 comprises a tyre corresponding the tyre 100 according to the examples of this description. The wheel assembly 102 may comprise a rim on which the tyre 100 is installed and the wheel assembly 102 is, e.g. by means of the rim, connectable to the frame 302, e.g. to a wheel mount 310 on the frame. The bogie axle assembly may include the wheel mount 310.

On each side of the frame 302 the forestry machine 300 may have at least one track corresponding the continuous track 200, each track 200 circling a single wheel assembly 102 or a pair of wheel assemblies 102, the track being placed on the tread section 10 of the tyre 100. The track 200 is in contact with the primary and secondary tread blocks 20, 24.

The frame 302 of the forestry machine 300 may be articulated. A cabin 304 with an operator's station, an engine 306 and an articulated boom 308 may be attached to frame 302. A tool 400 for handling timber may be attachable to an end of the boom 308. The tool 400 may be e.g. a felling head or harvester head used in a harvester or a timber grapple used in a forwarder.

In the present solution, see Figs. 5 and 6, the radially outermost surface 26 of the secondary tread block 24 offers a protecting surface adapted to protect the tread groove bottom 22 against damages caused by the track 200 to be placed on the tread section 10. Additionally, the shoulder surface 28 on a side of the tread section 10 offers a supporting surface adapted to support the track 200, e.g. the guide plate 204, that may contact the shoulder surface 28 which prevents lateral movement of the track 200. In an example, the shoulder surface 28 keeps the guide plate 204 from moving into the groove 38 and/or onto the tread section 10.

According to an example (see Figs. 5 and 6), in the present solution, additionally the shoulder surface 34 of the primary tread block 20 on a side of the tread section 10 offers a supporting surface adapted to support the track 200, e.g. the guide plate 204, that may contact the shoulder surface 34 which prevents lateral movement of the track 200. In an example, the shoulder surface 34 keeps the guide plate 204 from moving onto the tread section 10.

According to an example, the primary tread block 20 comprises in the radially outermost surface 32 one or more indentations 36 as shown in Fig. 4. The indentation 36 extends in the axial direction A across the primary tread block 20. The indentation 36 is adapted to support the track 200 and keep the track 200 in place.

According to an example (see Fig. 6), in the present solution for optimally supporting the track 200, inclination RA of the shoulder surface 28 of the secondary tread block 24 in relation to the radial direction R, or the equatorial plane EQ, equals or is substantially the same as inclination RB of the shoulder surface 34 of the primary tread block 20 in relation to the radial direction R, or the equatorial plane EQ. In the radial direction R, the shoulder surfaces 28, 34 are inclined in such a way that the farther the shoulder surfaces 28, 34 get from the centreline CL the nearer they get to the equatorial plane EQ.

The above-mentioned inclination angle RA, RB is at the most 15°, 20°, or 25°, or at the most 30°. Additionally, the above-mentioned inclination angle RA, RB is at least 10°, 15°, or 20°, or at least 25°.

According to an example as shown in Fig. 1, in the present solution for optimally supporting the track 200, the shoulder surfaces 28, 34 of the primary and secondary tread blocks 20, 24 are arranged in a circular pattern in relation to the centreline CL. Preferably, each shoulder surface 28, 34 includes a section on which the track 200 is supported. The sections on the shoulder surfaces 28, 34 are at equal or substantially equal distances D1 from the axis of rotation CL, see Fig. 6.

According to an example, in the present solution for optimally supporting the track 200, the shoulder surfaces 34 of the primary tread blocks 20 and the shoulder surfaces 28 of the secondary tread blocks 24 are in the axial direction A at equal distances D2 or at substantially equal distances D2 from the equatorial plane EP, see Fig. 6.

According to an example as shown in Fig. 3, in the present solution for optimally protecting the tread groove bottom 22 against the track 200 that is rocking on the tread section 10, e.g. on the shoulder surface 34, the secondary tread block 24 is positioned correspondingly.

Then, according to an example, the secondary tread block 24 between a pair of the primary tread blocks 20 is closer to one of the primary tread blocks 20 of the pair.

Preferably, in the shoulder region 16 or at the shoulder surface 28 of the secondary tread block 24, the secondary tread block 24 is located within a distance D4 from the one primary tread block 20. The distance D4 is at the most 75%, 70%, 65%, or 60%, or preferably at the most 50%, of the distance D3 between the primary tread blocks 20 of the pair, the distance D3 substantially corresponding the width of the tread groove 38. The distances D3, D4 are measured in the circumferential direction C, preferably in the shoulder region 16 or at the shoulder surface 28.

The forestry machine 300 may, instead of the track 200, have a tyre chain 500 encircling one or more tyres 100 and being placed on the tread section 10 of the tyre 100, see Fig. 7. The tyre chain 500 is in contact with the primary and secondary tread blocks 20, 24.

According to an example as shown in Figs. 4 and 6, the end of the secondary tread block 24, placed on the sidewall section 14, forms a step adapted to support the tyre chain 500 when the tyre chain 500 is placed on the tread section 10 and to keep the tyre chain 500 in place.

It is to be understood that the examples of the solution disclosed are not limited to the structures disclosed herein, but are extended to equivalents thereof as would be recognized by those skilled in the relevant art and within the scope of the appended claims.

It should also be understood that terminology employed herein is used for the purpose of describing particular examples only and is not intended to be limiting. Reference throughout this specification to "one example " or "an example" means that a particular feature, structure, or characteristic described in connection with the example is included in at least one example of the present solution. Especially, in the examples above, when referring to a property of e.g. a single tread block then all functionally corresponding tread blocks may include the same property.

As used herein, a plurality of items or structural elements may be presented in a common list for convenience. However, these lists should be construed as though each member of the list is individually identified as a separate and unique member.

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality, unless where specifically mentioned.

## Claims

1. A pneumatic tyre for forestry use, the tyre (100) comprising:
- a ground-engaging tread section (10) extending around the tyre in the circumferential direction (C) of the tyre, the tread section defining an imaginary equatorial plane (EP) that is perpendicular to an axial direction (A) of the tyre and passes through a centre region (40) of the tread section;
- a pair of bead sections (12), located on two opposite sides of the tyre;
- a pair of sidewall sections (14), located on two opposite sides of the tyre, wherein each sidewall section extends between the respective bead section and the tread section, and wherein the tread section (10) defines a pair of shoulder regions (16) adjacent to the respective sidewall section (14);
- wherein the tread section comprises a tread block row (50) on both sides of the equatorial plane and each tread block row extends in the circumferential direction;
- wherein each tread block row (50) comprises a series of primary tread blocks (20) that are spaced along the circumferential direction and define tread grooves (38) located between the primary tread blocks and defining a tread groove bottom (22) from which the primary tread blocks (20) extend radially to a height (H1) at which each primary tread block comprises a radially outermost surface (32);
- wherein each primary tread block (20) is oriented obliquely with respect to the circumferential direction and extends obliquely with respect to the axial direction from the centre region to the shoulder region;
- wherein each tread block row (50) further comprises a series of secondary tread blocks (24), each secondary tread block being located in the tread groove between two consecutive primary tread blocks (20) and extending radially from the tread groove bottom (22), each secondary tread block (24) extending in the tread groove obliquely with respect to the axial direction to the shoulder region; and
- wherein each secondary tread block (24) comprises a radially outermost surface (26) and an axially outermost shoulder surface (28) in such a way
- that the shoulder surface (28) in the shoulder region forms a continuation of the radially outermost surface (26) and is oriented obliquely in relation to the radially outermost surface and in relation to both the axial direction (A) and a radial direction (R), and
- that the radially outermost surface (26) provides a protecting surface suitable for safeguarding the tread groove bottom (22) from a track (200) which can be placed on the tread section and the shoulder surface (28) provides on a side of the tread section (10) a supporting surface suitable for supporting the track (200);
**characterized in that**
- each secondary tread block (24) extends radially from the tread groove bottom (22) to a height (H2) that is reduced with respect to the height (H1) of the radially outermost surfaces (32) of the primary tread blocks (20).

2. The tyre according to claim 1, wherein the shoulder surface (28) of the secondary tread block (24) forms in the shoulder region a bevelled edge of the secondary tread block.

3. The tyre according to claim 1 or 2, wherein the tread groove bottom (22) extends in the axial direction on opposite sides of the secondary tread block (24) to the sidewall section.

4. The tyre according to any one of claims 1 to 3, wherein the radially outermost surface (26) of each secondary tread block (24) approaches gradually a level defined by the tread groove bottom (22) while the secondary tread block (24) extends towards the centre region.

5. The tyre according to any one of claims 1 to 4, wherein the secondary tread blocks (24) extend past the primary tread blocks (20) and farther onto the sidewall section than the primary tread blocks in such a way that an end of each secondary tread block extends axially from the sidewall section, wherein the end of the secondary tread block forms a step (30) suitable for supporting a tyre chain which can be placed on the tread section (10) and suitable for keeping the tyre chain in place.

6. The tyre according to any one of claims 1 to 5,
- wherein each primary tread block (20) comprises the radially outermost surface (32) and an axially outermost shoulder surface (34), the shoulder surface in the shoulder region (16) forming a continuation of the radially outermost surface and being oriented obliquely in relation to the radially outermost surface and in relation to both the axial direction and the radial direction, and
- wherein the radially outermost surface (32) provides a supporting surface suitable for supporting the track (200) and the shoulder surface (34) provides on a side of the tread section a supporting surface suitable for supporting the track (200).

7. The tyre according to claim 6, wherein the shoulder surface (34) of the main tread block (20) forms in the shoulder region a bevelled edge of the main tread block.

8. The tyre according to claim 6 or 7, wherein inclination (RB) of the shoulder surface (28) of the secondary tread block (24) in relation to a radial direction (R) equals or is substantially the same as inclination (RA) of the shoulder surface (34) of the primary tread block (20) in relation to the radial direction.

9. The tyre according to any one of claims 6 to 8,
- wherein the shoulder surfaces (34) of the primary tread blocks (20) and the shoulder surfaces (28) of the secondary tread blocks (24) are arranged in a circular pattern; and
- wherein the shoulder surfaces (34) of the primary tread blocks (20) and the shoulder surfaces (28) of the secondary tread blocks (24) each comprise a section suitable for supporting the track (200) on the section, which sections are in the radial direction at equal distances (D1) or at substantially equal distances from the axis of rotation (CL) of the tyre.

10. The tyre according to any one of claims 6 to 9, wherein the shoulder surfaces (34) of the primary tread blocks (20) and the shoulder surfaces (28) of the secondary tread blocks (24) are in the axial direction at equal distances (D2) or at substantially equal distances from the equatorial plane (EP).

11. The tyre according to any one of claims 1 to 10, wherein the primary tread blocks (20) alternate in the centre region (40) in such a way that every other primary tread block is a primary tread block of one of the tread block rows (50) and every other primary tread block is a primary tread block of the other one of the tread block rows.

12. The tyre according to any one of claims 1 to 11, wherein each primary tread block (20) comprises in the radially outermost surface (32) one or more indentations (36) suitable for supporting the track (200), the one or more indentations extending in the axial direction across the primary tread block.

13. A forestry machine, comprising a frame, the frame having two opposite sides and being wheeled for propulsion of the forestry machine and having two or more wheel assemblies with tyres on each of the two opposite sides of the frame, **characterized by** at least one of the wheel assemblies comprising
- a tyre (100) according to any one of claims 1 to 12,
- wherein the forestry machine further comprises a continuous track (200) circling one of the wheel assemblies including the tyre and/or a pair of wheel assemblies including the tyre and being placed on the tread section (10) of the tyre, the track being in contact with the primary and secondary tread blocks (20, 24).

14. A method of installing tyres onto a forestry machine including a frame, the frame having two opposite sides and being wheeled for propulsion of the forestry machine and having two or more wheel assemblies with tyres on each of the two opposite sides of the frame, **characterized by** the method comprising
- mounting at least one of the wheel assemblies comprising a tyre (100) according to any one of claims 1 to 12 to the frame of the forestry machine.

15. The method according to claim 14, wherein the method further comprises
- installing a continuous track (200) to circle one of the wheel assemblies including the tyre and/or a pair of wheel assemblies including the tyre and being placed on the tread section (10) of the tyre, the track being in contact with the primary and secondary tread blocks (20, 24).

## Patentansprüche

1. Luftreifen für die forstwirtschaftliche Nutzung, wobei der Reifen (100) Folgendes aufweist:
- einen bodenberührenden Profilabschnitt (10), der in der Umfangsrichtung (C) des Reifens um den Reifen (100) verläuft, wobei der Profilabschnitt eine imaginäre Äquatorialebene (EP) definiert, die senkrecht zu einer axialen Richtung (A) des Reifens ist und durch einen Mittelbereich (40) des Profilabschnitts verläuft;
- ein Paar Wulstabschnitte (12), die sich auf zwei entgegengesetzten Seiten des Reifens befinden;
- ein Paar Seitenwandabschnitte (14), die sich auf zwei entgegengesetzten Seiten des Reifens befinden, wobei jeder Seitenwandabschnitt zwischen dem jeweiligen Wulstabschnitt und dem Profilabschnitt verläuft und wobei der Profilabschnitt (10) ein Paar Schulterbereiche (16) angrenzend an den jeweiligen Seitenwandabschnitt (14) definiert;
- wobei der Profilabschnitt eine Profilblockreihe (50) auf beiden Seiten der Äquatorialebene aufweist und jede Profilblockreihe in Umfangsrichtung verläuft;
- wobei jede Profilblockreihe (50) eine Reihe von primären Profilblöcken (20) aufweist, die entlang der Umfangsrichtung beabstandet sind und Profilrillen (38) definieren, die sich zwischen den primären Profilblöcken befinden und einen Profilrillenboden (22) definieren, von dem aus die primären Profilblöcke (20) radial bis zu einer Höhe (H1) verlaufen, bei der jeder primäre Profilblock eine radial äußerste Fläche (32) aufweist;
- wobei jeder primäre Profilblock (20) schräg in Bezug auf die Umfangsrichtung ausgerichtet ist und schräg in Bezug auf die axiale Richtung von dem Mittelbereich zu dem Schulterbereich verläuft;
- wobei jede Profilblockreihe (50) ferner eine Reihe von sekundären Profilblöcken (24) aufweist, wobei sich jeder sekundäre Profilblock in der Profilrille zwischen zwei aufeinanderfolgenden primären Profilblöcken (20) befindet und ausgehend vom Profilrillenboden (22) radial verläuft, wobei jeder sekundäre Profilblock (24) in der Profilrille schräg in Bezug auf die axiale Richtung zum Schulterbereich verläuft; und
- wobei jeder sekundäre Profilblock (24) eine radial äußerste Fläche (26) und eine axial äußerste Schulterfläche (28) derart aufweist,
- dass die Schulterfläche (28) in dem Schulterbereich eine Fortsetzung der radial äußersten Fläche (26) bildet und zur radial äußersten Fläche und in Bezug sowohl zu der axialen Richtung (A) als auch zu der radialen Richtung (R) schräg ausgerichtet ist; und
- dass die radial äußerste Fläche (26) eine Schutzfläche vorsieht, die geeignet ist, um den Profilrillenboden (22) gegen einer Kette (200) zu schützen, die auf den Profilabschnitt aufgelegt werden kann, und die Schulterfläche (28) auf einer Seite des Profilabschnitts (10) eine Tragfläche vorsieht, die geeignet ist, die Kette (200) zu tragen;
**dadurch gekennzeichnet, dass**
- jeder sekundäre Profilblock (24) radial vom Profilrillenboden (22) bis zu einer Höhe (H2) verläuft, die bezüglich der Höhe (H1) der radial äußersten Flächen (32) der primären Profilblöcke (20) reduziert ist.

2. Reifen nach Anspruch 1, wobei die Schulterfläche (28) des sekundären Profilblocks (24) im Schulterbereich eine abgeschrägte Kante des sekundären Profilblocks bildet.

3. Reifen nach Anspruch 1 oder 2, wobei der Profilrillenboden (22) in axialer Richtung auf entgegengesetzten Seiten des sekundären Profilblocks (24) zum Seitenwandabschnitt verläuft.

4. Reifen nach einem der Ansprüche 1 bis 3, wobei sich die radial äußerste Fläche (26) jedes sekundären Profilblocks (24) allmählich einem durch den Profilrillenboden (22) definierten Niveau annähert, während der sekundäre Profilblock (24) in Richtung zum Mittelbereich verläuft.

5. Reifen nach einem der Ansprüche 1 bis 4, wobei die sekundären Profilblöcke (24) an den primären Profilblöcken (20) vorbei und weiter auf den Seitenwandabschnitt als die primären Profilblöcke verlaufen, so dass ein Ende jedes sekundären Profilblocks ausgehend vom Seitenwandabschnitt axial verläuft, wobei das Ende des sekundären Profilblocks einen Absatz (30) bildet, der geeignet ist, eine Reifenkette zu tragen, die auf den Profilabschnitt (10) aufgelegt werden kann, und geeignet ist, die Reifenkette an Ort und Stelle zu halten.

6. Reifen nach einem der Ansprüche 1 bis 5,
- wobei jeder primäre Profilblock (20) die radial äußerste Fläche (32) und eine axial äußerste Schulterfläche (34) aufweist, wobei die Schulterfläche in dem Schulterbereich (16) eine Fortsetzung der radial äußersten Fläche bildet und in Bezug auf die radial äußerste Fläche und in Bezug auf die axiale Richtung als auch auf die radiale Richtung schräg ausgerichtet ist, und
- wobei die radial äußerste Fläche (32) eine Tragfläche vorsieht, die geeignet ist, die Kette (200) zu tragen, und die Schulterfläche (34) auf einer Seite des Profilabschnitts eine Tragfläche vorsieht, die geeignet ist, die Kette (200) zu tragen.

7. Reifen nach Anspruch 6, wobei die Schulterfläche (34) des Hauptprofilblocks (20) im Schulterbereich eine abgeschrägte Kante des Hauptprofilblocks bildet.

8. Reifen nach Anspruch 6 oder 7, wobei eine Neigung (RB) der Schulterfläche (28) des sekundären Profilblocks (24) in Bezug auf eine radiale Richtung (R) gleich oder im Wesentlichen gleich einer Neigung (RA) der Schulterfläche (34) des primären Profilblocks (20) in Bezug auf die radiale Richtung ist.

9. Reifen nach einem der Ansprüche 6 bis 8,
- wobei die Schulterflächen (34) der primären Profilblöcke (20) und die Schulterflächen (28) der sekundären Profilblöcke (24) in einem kreisförmigen Muster angeordnet sind; und
- wobei die Schulterflächen (34) der primären Profilblöcke (20) und die Schulterflächen (28) der sekundären Profilblöcke (24) jeweils einen Abschnitt aufweisen, der zum Tragen der Kette (200) auf dem Abschnitt geeignet ist, wobei sich die Abschnitte in radialer Richtung in gleichen Abständen (D1) oder in im Wesentlichen gleichen Abständen von der Drehachse (CL) des Reifens befinden.

10. Reifen nach einem der Ansprüche 6 bis 9, wobei sich die Schulterflächen (34) der primären Profilblöcke (20) und die Schulterflächen (28) der sekundären Profilblöcke (24) in axialer Richtung in gleichen Abständen (D2) oder in im Wesentlichen gleichen Abständen von der Äquatorialebene (EP) befinden.

11. Reifen nach einem der Ansprüche 1 bis 10, wobei sich die primären Profilblöcke (20) im Mittelbereich (40) so abwechseln, dass jeder zweite primäre Profilblock ein primärer Profilblock einer der Profilblockreihen (50) und jeder andere primäre Profilblock ein primärer Profilblock der anderen der Profilblockreihen ist.

12. Reifen nach einem der Ansprüche 1 bis 11, wobei jeder primäre Profilblock (20) in der radial äußersten Fläche (32) eine oder mehrere Vertiefungen (36) aufweist, die geeignet sind, die Kette (200) zu tragen, wobei die eine oder die mehreren Vertiefungen in axialer Richtung über den primären Profilblock verlaufen.

13. Forstmaschine, die einen Rahmen aufweist, wobei der Rahmen zwei entgegengesetzte Seiten aufweist und zum Antrieb der Forstmaschine mit Rädern versehen ist und zwei oder mehr Radbaugruppen mit Reifen auf jeder der beiden entgegengesetzten Seiten des Rahmens aufweist, **dadurch gekennzeichnet, dass** mindestens eine der Radbaugruppen aufweist:
- einen Reifen (100) nach einem der Ansprüche 1 bis 12,
- wobei die Forstmaschine ferner eine Gleiskette (200) aufweist, die um eine der Radbaugruppen einschließlich des Reifens und/oder ein Paar Radbaugruppen einschließlich des Reifens herumläuft und auf den Profilabschnitt (10) des Reifens aufgelegt ist, wobei die Gleiskette in Kontakt mit den primären und sekundären Profilblöcken (20, 24) steht.

14. Verfahren zum Installieren von Reifen an einer Forstmaschine mit einem Rahmen, wobei der Rahmen zwei entgegengesetzte Seiten aufweist und zum Antrieb der Forstmaschine mit Rädern versehen ist und zwei oder mehr Radbaugruppen mit Reifen auf jeder der beiden entgegengesetzten Seiten des Rahmens aufweist, **dadurch gekennzeichnet, dass** das Verfahren umfasst:
- Montieren mindestens einer der Radbaugruppen, die einen Reifen (100) gemäß einem der Ansprüche 1 bis 12 aufweisen, an dem Rahmen der Forstmaschine.

15. Verfahren nach Anspruch 14, wobei das Verfahren ferner umfasst:
- Installieren einer Gleiskette (200), um eine der Radbaugruppen einschließlich des Reifens und/oder ein Paar Radbaugruppen einschließlich des Reifens zu umgeben und auf dem Profilabschnitt (10) des Reifens aufgelegt zu werden, wobei die Kette in Kontakt mit den primären und sekundären Profilblöcken (20, 24) steht.

## Revendications

1. Bandage pneumatique à usage forestier, le pneumatique (100) comprenant :
- une partie bande de roulement en contact avec le sol (10), s'étendant autour du pneumatique dans la direction circonférentielle (C) du pneumatique, la partie bande de roulement définissant un plan équatorial imaginaire (EP, equatorial plane) qui est perpendiculaire à une direction axiale (A) du pneumatique et qui passe par une région centrale (40) de la partie bande de roulement ;
- une paire de parties talons (12) situées sur deux côtés opposés du pneumatique ;
- une paire de parties flancs (14) situées sur deux côtés opposés du pneumatique, dans lequel chaque partie flanc s'étend entre la partie talon respective et la partie bande de roulement, et dans lequel la partie bande de roulement (10) définit une paire de régions d'épaules (16) adjacentes à la partie flanc respective (14) ;
- dans lequel la partie bande de roulement comprend une rangée de pavés de bande de roulement (50) des deux côtés du plan équatorial et chaque rangée de pavés de bande de roulement s'étend dans la direction circonférentielle ;
- dans lequel chaque rangée de pavés de bande de roulement (50) comprend une série de pavés primaires de bande de roulement (20) qui sont espacés le long de la direction circonférentielle et qui définissent des rainures de bande de roulement (38) situées entre les pavés primaires de bande de roulement et définissant un fond de rainure de bande de roulement (22) à partir duquel les pavés primaires de bande de roulement (20) s'étendent radialement jusqu'à une hauteur (H1) à laquelle chaque pavé primaire de bande de roulement présente une surface la plus extérieure radialement (32) ;
- dans lequel chaque pavé primaire de bande de roulement (20) est orienté obliquement par rapport à la direction circonférentielle et s'étend obliquement par rapport à la direction axiale, de la région centrale à la région d'épaule ;
- dans lequel chaque rangée de pavés de bande de roulement (50) comprend en outre une série de pavés secondaires de bande de roulement (24), chaque pavé secondaire de bande de roulement étant situé dans la rainure de bande de roulement, entre deux pavés primaires de bande de roulement consécutifs (20) et s'étendant radialement à partir du fond de rainure de bande de roulement (22), chaque pavé secondaire de bande de roulement (24) s'étendant dans la rainure de bande de roulement obliquement par rapport à la direction axiale vers la région d'épaule ; et
- dans lequel chaque pavé secondaire de bande de roulement (24) présente une surface la plus extérieure radialement (26) et une surface d'épaule la plus extérieure axialement (28), de telle sorte que :
- la surface d'épaule (28) dans la région d'épaule forme un prolongement de la surface la plus extérieure radialement (26) et soit orientée obliquement relativement à la surface la plus extérieure radialement et relativement à la fois à la direction axiale (A) et à une direction radiale (R), et
- la surface la plus extérieure radialement (26) procure une surface de protection appropriée pour préserver le fond de rainure de bande de roulement (22), d'une chenille (200) qui peut être placée sur la partie bande de roulement et que la surface d'épaule (28) procure sur un côté de la partie bande de roulement (10) une surface de support appropriée pour supporter la chenille (200) ;
**caractérisé en ce que** :
- chaque pavé secondaire de bande de roulement (24) s'étend radialement à partir du fond de rainure de bande de roulement (22) jusqu'à une hauteur (H2) qui est réduite par rapport à la hauteur (H1) des surfaces les plus extérieures radialement (32) des pavés primaires de bande de roulement (20).

2. Pneumatique selon la revendication 1, dans lequel la surface d'épaule (28) du pavé secondaire de bande de roulement (24) forme, dans la région d'épaule, un bord biseauté du pavé secondaire de bande de roulement.

3. Pneumatique selon la revendication 1 ou 2, dans lequel le fond de rainure de bande de roulement (22) s'étend dans la direction axiale, sur des côtés opposés du pavé secondaire de bande de roulement (24) vers la partie flanc.

4. Pneumatique selon l'une quelconque des revendications 1 à 3, dans lequel la surface la plus extérieure radialement (26) de chaque pavé secondaire de bande de roulement (24) se rapproche progressivement d'un niveau défini par le fond de rainure de bande de roulement (22) tandis que le pavé secondaire de bande de roulement (24) s'étend vers la région centrale.

5. Pneumatique selon l'une quelconque des revendications 1 à 4, dans lequel les pavés secondaires de bande de roulement (24) s'étendent au-delà des pavés primaires de bande de roulement (20) et plus loin sur la partie flanc que les pavés primaires de bande de roulement, de telle sorte qu'une extrémité de chaque pavé secondaire de bande de roulement s'étende axialement à partir de la partie flanc, dans lequel l'extrémité du pavé secondaire de bande de roulement forme un gradin (30) approprié pour supporter une chaîne antidérapante qui peut être placée sur la partie bande de roulement (10) et approprié pour maintenir la chaîne antidérapante en place.

6. Pneumatique selon l'une quelconque des revendications 1 à 5,
- dans lequel chaque pavé primaire de bande de roulement (20) présente la surface la plus extérieure radialement (32) et une surface d'épaule la plus extérieure axialement (34), la surface d'épaule dans la région d'épaule (16) formant un prolongement de la surface la plus extérieure radialement et étant orientée obliquement relativement à la surface la plus extérieure radialement et relativement à la fois à la direction axiale et à la direction radiale, et
- dans lequel la surface la plus extérieure radialement (32) procure une surface de support appropriée pour supporter la chenille (200) et la surface d'épaule (34) procure sur un côté de la partie bande de roulement une surface de support appropriée pour supporter la chenille (200).

7. Pneumatique selon la revendication 6, dans lequel la surface d'épaule (34) du pavé principal de bande de roulement (20) forme, dans la région d'épaule, un bord biseauté du pavé principal de bande de roulement.

8. Pneumatique selon la revendication 6 ou 7, dans lequel l'inclinaison (RB) de la surface d'épaule (28) du pavé secondaire de bande de roulement (24) relativement à une direction radiale (R) est égale ou sensiblement identique à l'inclinaison (RA) de la surface d'épaule (34) du pavé primaire de bande de roulement (20) relativement à la direction radiale.

9. Pneumatique selon l'une quelconque des revendications 6 à 8,
- dans lequel les surfaces d'épaules (34) des pavés primaires de bande de roulement (20) et les surfaces d'épaules (28) des pavés secondaires de bande de roulement (24) sont agencées en un motif circulaire ; et
- dans lequel les surfaces d'épaules (34) des pavés primaires de bande de roulement (20) et les surfaces d'épaules (28) des pavés secondaires de bande de roulement (24) présentent chacune une partie appropriée pour supporter la chenille (200) sur la partie, lesquelles parties sont dans la direction radiale à égale distance (D1) ou sensiblement à égale distance de l'axe de rotation (CL) du pneumatique.

10. Pneumatique selon l'une quelconque des revendications 6 à 9, dans lequel les surfaces d'épaules (34) des pavés primaires de bande de roulement (20) et les surfaces d'épaules (28) des pavés secondaires de bande de roulement (24) sont dans la direction axiale à égale distance (D2) ou sensiblement à égale distance du plan équatorial (EP).

11. Pneumatique selon l'une quelconque des revendications 1 à 10, dans lequel les pavés primaires de bande de roulement (20) alternent dans la région centrale (40) de telle sorte qu'un pavé primaire de bande de roulement sur deux soit un pavé primaire de bande de roulement de l'une des rangées de pavés de bande de roulement (50) et qu'un pavé primaire de bande de roulement sur deux soit un pavé primaire de bande de roulement de l'autre des rangées de pavés de bande de roulement.

12. Pneumatique selon l'une quelconque des revendications 1 à 11, dans lequel chaque pavé primaire de bande de roulement (20) présente sur sa surface la plus extérieure radialement (32) une ou plusieurs indentation(s) (36) appropriée(s) pour supporter la chenille (200), l'indentation ou les indentations s'étendant dans la direction axiale en travers du pavé primaire de bande de roulement.

13. Engin forestier comprenant un châssis, le châssis présentant deux côtés opposés et étant monté sur roues pour la propulsion de l'engin forestier et comportant deux ensembles roues ou davantage, dotés de pneumatiques sur chacun des deux côtés opposés du châssis, **caractérisé en ce qu'**au moins l'un des ensembles roues comprend :
- un pneumatique (100) selon l'une quelconque des revendications 1 à 12,
- dans lequel l'engin forestier comprend en outre une chenille (200) entourant l'un des ensembles roues comportant le pneumatique et/ou une paire d'ensembles roues comportant le pneumatique, et étant placée sur la partie bande de roulement (10) du pneumatique, la chenille étant en contact avec les pavés primaires et secondaires de bande de roulement (20, 24).

14. Procédé d'installation de pneumatiques sur un engin forestier comportant un châssis, le châssis présentant deux côtés opposés et étant monté sur roues pour la propulsion de l'engin forestier et comportant deux ensembles roues ou davantage, dotés de pneumatiques sur chacun des deux côtés opposés du châssis, **caractérisé en ce que** le procédé comprend l'étape suivante :
- monter au moins l'un des ensembles roues comprenant un pneumatique (100) selon l'une quelconque des revendications 1 à 12 sur le châssis de l'engin forestier.

15. Procédé selon la revendication 14, dans lequel le procédé comprend en outre l'étape suivante :
- installer une chenille (200) devant entourer l'un des ensembles roues comportant le pneumatique et/ou une paire d'ensembles roues comportant le pneumatique, et étant placée sur la partie bande de roulement (10) du pneumatique, la chenille étant en contact avec les pavés primaires et secondaires de bande de roulement (20, 24).
